# EUROPÄISCHE PATENTANMELDUNG

(11) **EP 1 217 252 A2**
(43) Veröffentlichungstag der Anmeldung: **26.06.2002**
(21) Anmeldenummer: 01128670.5
(22) Anmeldetag: 01.12.2001
(51) Int. Cl.: F16F 13/10

(54) **Hydrolager**

(30) Priorität: 21.12.2000 DE 10064331
(71) Anmelder: Carl Freudenberg KG, 69469 Weinheim (DE)
(72) Erfinder: West, John Philip, Kirklington NG22 8ND, Nottinghamshire (GB)

(57) **Zusammenfassung**

Hydrolager, umfassend ein Traglager (1) und ein Auflager (2), die durch einen Federkörper (3) aus gummielastischem Werkstoff aufeinander abgestützt sind und einen Arbeits- (4) und der Ausgleichsraum (5) begrenzen, wobei der Arbeits- (4) und einen Ausgleichsraum (5) jeweils mit Dämpfungsflüssigkeit (6) gefüllt und flüssigkeitsleitend verbunden sind, wobei das Auflager (2) im Wesentlichen topfförmig ausgebildet ist, wobei das Traglager (1) und der Federkörper (3) im Wesentlichen in dem vom topfförmigen Auflager (2) begrenzten Innenraum (7) angeordnet sind, wobei das Auflager (2) außenumfangsseitig zweischalig ausgebildet ist und einen Außenring (8) aufweist, der einen Innenring (9) mit radialem Abstand umschließt, wobei in dem durch den Abstand gebildeten Spalt der Ausgleichsraum (5) angeordnet ist, der durch eine sich in axialer Richtung erstreckende und in radialer Richtung ausbauchbare, im Wesentlichen drucklos Volumen aufnehmende Begrenzungswand (11) begrenzt ist und wobei die Begrenzungswand (11) flüssigkeitsdicht zwischen Außen- (8) und Innenring (9) angeordnet ist.

## Beschreibung

### Stand der Technik

Hydrolager sind allgemein bekannt, beispielsweise aus der EP 0 547 287 B1. Das vorbekannte Hydrolager umfaßt ein topfförmiges Gehäuse, bei dem die Öffnung durch ein ringförmig ausgebildetes Federelement aus elastomerem Werkstoff verschlossen ist, wobei in axialer Richtung zwischen dem Federelement und dem Gehäuseboden eine Trennwand mit einer Durchtrittsöffnung angeordnet ist. Die Trennwand begrenzt in axialer Richtung einerseits mit dem Federelement einen Arbeitsraum und in axialer Richtung andererseits mit einer Begrenzungswand einen Ausgleichsraum. Der Arbeits- und der Ausgleichsraum sind jeweils mit Dämpfungsflüssigkeit gefüllt und durch die Durchtrittsöffnung in der Trennwand flüssigkeitsleitend verbunden. Die Trennwand zwischen dem Arbeits- und dem Ausgleichsraum ist in axialer Richtung zweiteilig ausgeführt und gitterartig durchbrochen. Axial zwischen den Teilen der Trennwand ist im Bereich der gitterartigen Struktur eine kreisringförmige und in axialer Richtung schwingfähige Membran angeordnet.
Dadurch, dass der Arbeitsraum und der Ausgleichsraum in axialer Richtung hintereinander geschaltet sind, baut das vorbekannte Hydrolager in axialer Richtung vergleichsweise groß. Außerdem weist die Trennwand zwischen dem Arbeits- und dem Ausgleichsraum einen vergleichsweise komplizierten Aufbau auf, was in funktionstechnischer und wirtschaftlicher Hinsicht wenig zufriedenstellend ist.

### Darstellung der Erfindung

Der Erfindung liegt die Aufgabe zugrunde, ein Hydrolager der eingangs genannten Art derart weiterzuentwickeln, dass es in axialer Richtung kompaktere Abmessungen aufweist. Außerdem soll das erfindungsgemäße Hydrolager durch einen teilearmen Aufbau einfach und kostengünstig herstellbar sein.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Hydrolager vorgesehen, umfassend ein Traglager und ein Auflager, die durch einen Federkörper aus gummielastischem Werkstoff aufeinander abgestützt sind und einen Arbeits- und einen Ausgleichsraum begrenzen, wobei der Arbeits- und der Ausgleichsraum jeweils mit Dämpfungsflüssigkeit gefüllt und flüssigkeitsleitend verbunden sind, wobei das Auflager im Wesentlichen topfförmig ausgebildet ist, wobei das Traglager und der Federkörper im Wesentlichen in dem vom topfförmigen Auflager begrenzten Innenraum angeordnet sind, wobei das Auflager außenumfangsseitig zweischalig ausgebildet ist und einen Außenring aufweist, der einen Innenring mit radialem Abstand umschließt, wobei in dem durch den Abstand gebildeten Spalt der Ausgleichsraum angeordnet ist, der durch eine sich in axialer Richtung erstreckende und in radialer Richtung ausbauchbare, im Wesentlichen drucklos Volumen aufnehmende Begrenzungswand begrenzt ist und wobei die Begrenzungswand flüssigkeitsdicht zwischen Außen- und Innenring angeordnet ist. Dadurch, dass der Ausgleichsraum den Arbeitsraum zumindest teilweise außenumfangsseitig umschließt, baut das Hydrolager in Richtung der eingeleiteten Schwingungen sehr kompakt. Durch die Anordnung von Arbeitsraum und Ausgleichsraum zueinander ist eine Trennwand im Sinne des Stands der Technik entbehrlich, so dass das Hydrolager durch den einfachen und teilearmen Aufbau kostengünstig herstellbar ist.

Der Federkörper kann, wie bei Hydrolagern üblich, im Wesentlichen kegelstumpfförmig ausgebildet sein. Hierbei ist von Vorteil, dass der Federkörper während der bestimmungsgemäßen Verwendung zumeist unter einer Druckvorspannung steht, so dass gebrauchsdauerverringernde Zugspannungen weitgehend ausgeschlossen sind.

Die Begrenzungswand kann rollbalgförmig ausgebildet sein. Bei einer rollbalgförmigen Ausbildung ist von Vorteil, dass Flüssigkeitsbestandteile, die vom Arbeitsraum und den Ausgleichsraum verlagert werden, im Arbeitsraum nur zu einem vernachlässigbar geringen Druckanstieg führen. Das Flüssigkeitsvolumen wird innerhalb des Ausgleichsraums durch die ausgezeichnete Beweglichkeit der rollbalgförmigen Begrenzungswand im Wesentlichen drucklos aufgenommen. Durch die rollbalgförmige Gestalt der Begrenzungswand sind die mechanischen Belastungen sehr gering und das Hydrolager weist gute Gebrauchseigenschaften während einer langen Gebrauchsdauer auf.

Der Federkörper kann zwischen dem Traglager und dem Innenring vulkanisiert sein. Dadurch ist eine sehr dauerhaltbare Verbindung bedingt.

Der Innenring und die Begrenzungswand können einen Dämpfungskanal begrenzen, der den Arbeits- und den Ausgleichsraum flüssigkeitsleitend verbindet. Der Dämpfungskanal ist dabei derart bemessen, dass tieffrequente, großamplitudige Schwingungen, die in das Hydrolager eingeleitet werden, durch eine Hin- und Herverlagerung von Flüssigkeitsbestandteilen innerhalb des Dämpfungskanals, die sich gegenphasig zu den eingeleiteten Schwingungen bewegen, gedämpft werden.

Der Ausgleichsraum kann vom Außenumfang des Innenrings und dem Innenumfang der Begrenzungswand begrenzt sein. Die aus dem Arbeitsraum durch dem Dämpfungskanal verdrängten Flüssigkeitsbestandteile gelangen in den Ausgleichsraum und werden dort, wegen der weichen Auslegung der Begrenzungswand, im Wesentlichen ohne Erhöhung des Drucks aufgenommen. Der Außenring ist mit zumindest einer Ausnehmung versehen, wobei die dem Ausgleichsraum abgewandte Seite der Begrenzungswand dadurch mit dem Druck der Umgebung beaufschlagt ist.

Der Außenring ist bevorzugt durch ein tiefziehbares Blechteil gebildet, das die dem Traglager zugewandte Stirnseite des Innenrings formschlüssig umgreift. Tiefziehbare Blechteile sind einfach und kostengünstig herstellbar und beispielsweise durch Umbördeln an benachbart angrenzenden Teilen festlegbar.

Der Außenring kann einen Boden aufweisen, der die auflagerseitige Stirnseite des Hydrolagers bildet. Dadurch bildet der Boden die dem Traglager abgewandte Begrenzung des Arbeitsraums, wobei der Arbeitsraum bevorzugt durch beispielsweise wulstförmige Bestandteile der Begrenzungswand abgedichtet und dadurch gegen einen Verlust von Hydraulikflüssigkeit geschützt ist.

Der Boden kann zumindest einen in Richtung des Traglagers vorstehenden ersten Anschlagpuffer aufweisen. Durch die Verwendung von Anschlagpuffern, die sich axial in Richtung der eingeleiteten Schwingungen erstrecken, ist von Vorteil, dass extreme Auslenkbewegungen des Traglagers, bezogen auf das Auflager, verhindert werden. Durch die begrenzte Einfederung sind die mechanischen Belastungen auf den Federkörper reduziert. Der Federkörper weist gleichbleibend gute Gebrauchseigenschaften während einer langen Gebrauchsdauer auf. Der Anschlagpuffer kann beispielsweise kreisringförmig ausgebildet und im Zentrum des Bodens angeordnet sein. Davon abweichend besteht allerdings auch die Möglichkeit, mehrere, einander benachbarte Anschlagpuffer vorzusehen.

Der erste Anschlagpuffer kann aus einem elastomeren Werkstoff bestehen. Besonders vorteilhaft im Hinblick auf die zu lösende Aufgabe ist es, wenn der erste Anschlagpuffer und die Begrenzungswand materialeinheitlich und einstückig ineinander übergehend ausgebildet sind. Die Begrenzungswand ist dann im Bereich des Bodens umgelenkt und überdeckt diesen beispielsweise vollständig. Der erste Anschlagpuffer kann beispielsweise durch den Kopf einer Befestigungsschraube gebildet sein, die vom elastomeren Werkstoff der Begrenzungswand überdeckt ist. Zusätzlich und/oder alternativ besteht auch die Möglichkeit, dass das Traglager durch einen Kern gebildet ist, der einen in Richtung des Bodens angeordneten Vorsprung aufweist. Der Vorsprung ist dabei bevorzugt vom elastomeren Werkstoff des Federkörpers überdeckt. Bereits während der Vulkanisation des Federkörpers entsteht zeitgleich der erste Anschlagpuffer. Das Traglager weist dann zumindest einen axial in Richtung des Arbeitsraums vorstehenden zweiten Anschlagpuffer auf.

Der erste und der zweite Anschlagpuffer können zur Begrenzung von extremen Auslenkbewegungen in axialer Richtung aneinander anlegbar sein. Davon abweichende Ausgestaltungen, bei denen der erste Anschlagpuffer am Traglager anlegbar ist und der zweite Anschlagpuffer am Boden, sind ebenfalls denkbar. Dadurch, dass extreme Auslenkbewegungen des Federkörpers vermieden werden, ist die Haltbarkeit des Federkörpers erhöht.

Innerhalb des Arbeitsraums kann eine in axialer Richtung schwingfähige Membran angeordnet sei. Diese Membran ist zur Isolierung höherfrequenter, kleinamplitudiger Schwingungen vorgesehen. Die Isolierung höherfrequenter, kleinamplitudiger Schwingungen erfolgt derart, dass der Dämpfungskanal bei Einleitung solcher Schwingungen hydraulisch blockiert ist und die Membran gegenphasig zu den eingeleiteten, höherfrequenten Schwingungen schwingt. Solche Schwingungen, die beispielsweise durch das Profil von abrollenden Fahrzeugreifen und/oder durch den Oberflächenbelag einer Fahrbahn angeregt werden, werden dadurch wirkungsvoll isoliert.

Gemäß einer einfachen Ausgestaltung kann es vorgesehen sein, dass die Membran materialeinheitlich und einstückig ineinander übergehend mit der Begrenzungswand ausgebildet ist und dem Boden in zumindest einem kreisringförmigen Teilbereich mit axialem Abstand benachbart zugeordnet ist. Die Membran und die Begrenzungswand bestehen aus einem einheitlichen elastomeren Werkstoff, wobei die Einheit, bestehend aus Membran und Begrenzungswand, zwischen dem Innenring und dem Außenring des Traglagers, bevorzugt kraft- und/oder formschlüssig gehalten ist.

Um sicherzustellen, dass der kreisringförmige Teilbereich der Membran in jedem Betriebszustand schwingfähig ist und sich nicht bleibend am Boden anlegt, kann es vorgesehen sein, dass der kreisringförmige Teilbereich außenund innenumfangsseitig durch jeweils zumindest einen Abstandhalter am Boden abgestützt ist. Der Boden bildet dadurch in Richtung des Auflagers einen Anschlag für den kreisringförmigen Teilbereich.

Um einen Anschlag auch auf der dem Arbeitsraum zugewandten Seite des kreisringförmigen Teilbereichs bereit zu stellen, kann es vorgesehen sein, dass der Teilbereich auf der dem Arbeitsraum zugewandten Seite von einem mit axialem Abstand benachbart angeordneten gitterförmigen Anschlag überdeckt ist. Der gitterförmige Anschlag kann dabei als separat hergestelltes Einlegeteil ausgebildet sein und beispielsweise in axialer Richtung zwischen dem Innenring und der Membran eingeklemmt sein. Das Einlegeteil besteht aus einem zähharten Werkstoff, beispielsweise aus einem metallischen Werkstoff. Hierbei ist von Vorteil, dass das Einlegeteil dauerhaft gegen die Dämpfungsflüssigkeit resistent ist. Davon abweichend besteht auch die Möglichkeit, das Einlegeteil aus einem geeigneten polymeren Werkstoff zu fertigen.

Bevorzugt ist der kreisringförmige, schwingfähige Teilbereich der Membran in axialer Richtung mittig zwischen dem Boden und dem Anschlag angeordnet, so dass der jeweilige axiale Abstand zwischen dem Teilbereich und dem Boden sowie dem Teilbereich und dem Anschlag im Wesentlichen gleich ist.

Nach einer anderen Ausgestaltung besteht die Möglichkeit, dass innerhalb des Arbeitsraums eine in radialer Richtung schwingfähige Membran angeordnet ist. Bei einer derartigen Ausgestaltung ist von Vorteil, dass die Begrenzungswand und die Membran zwar ebenfalls einstückig ineinander übergehend und materialeinheitlich ausgebildet sein können, dass jedoch der Boden des Auflagers nicht soweit von der Membran überdeckt zu sein braucht, wie bei der zuvor beschriebenen Ausgestaltung, bei der sich der kreisringförmige Teilbereich parallel zum Boden erstreckt. Neben einer Materialeinsparung von elastomerem Werkstoff ist bei einer derartigen Ausgestaltung von Vorteil, dass der dem Arbeitsraum zugewandten, gitterförmige Anschlag einen einstückigen Bestandteil des Innenrings bilden kann, so dass es eines separaten Einlegeteils nicht bedarf. Die Membran ist dann radial innenseitig und radial außenseitig mit axialem Abstand benachbart zu dem gitterförmigen Anschlag und dem Außenring angeordnet, wobei der Außenring im Bereich der Membran, ebenso wie beim vorherigen Ausführungsbeispiel, zumindest eine in Richtung der Umgebung offene Durchbrechung aufweist. Die Membran erstreckt sich in axialer Richtung, wobei auf der dem Arbeitsraum radial zugewandten Seite ein gitterförmiger Anschlag vorgesehen ist, der die Membran überdeckt.

Durch diese Form des Hydrolagers werden Anschläge für axiale und radiale Auslenkbewegungen gebildet. Außerdem wird durch den Innenraum des ersten Anschlags ein vorteilhafter Effekt im höherfrequenten Bereich erzielt. In diesem Frequenzbereich ergibt sich eine Hin- und Herverlagerung der Flüssigkeitsbestandteile in und aus diesem Bereich.

Dem Traglager kann auf seiner dem Auflager axial abgewandten Seite ein Ausfederanschlag zugeordnet sein. Der Ausfederanschlag begrenzt die Ausfederbewegung des Traglagers, bezogen auf das Auflager und verhindert dadurch, dass der Federkörper gebrauchsdauerverringernd Zug- und/oder Schubspannungen ausgesetzt wird. Der Ausfederanschlag kann beispielsweise im Wesentlichen kreisringförmig ausgebildet sein, wobei er mit seinem Außenumfang beispielsweise im Außenring eingeklemmt ist, sich in radialer Richtung innenliegend am Innenring abstützt und dem Traglager mit axialem Abstand benachbart zugeordnet ist. Um Anschlaggeräusche bei extremen Ausfederbewegungen zu vermeiden, kann es vorgesehen sein, dass der Innenumfang des Ausfederanschlags und/oder die dem Ausfederanschlag zugewandte Seite des Traglagers mit zumindest einem Puffer aus elastomerem Werkstoff versehen ist.

Der Ausfederanschlag und das Traglager sind nur bei unerwünscht großen Ausfederbewegungen des Hydrolagers in Berührung bringbar.

### Kurzbeschreibung der Zeichnungen

Sechs Ausführungsbeispiele des erfindungsgemäßen Hydrolagers werden nachfolgend anhand der Figuren 1 bis 12 näher beschrieben. Diese zeigen jeweils in schematischer Darstellung:
- Fig. 1: einen Längsschnitt durch ein erstes Ausführungsbeispiel,
- Fig. 2: einen Querschnitt durch das Ausführungsbeispiel aus Fig. 1,
- Fig. 3: einen Längsschnitt durch ein zweites Ausführungsbeispiel,
- Fig. 4: einen Querschnitt durch das Ausführungsbeispiel aus Fig. 3,
- Fig. 5: einen Längsschnitt durch ein drittes Ausführungsbeispiel,
- Fig. 6: einen Querschnitt durch das Ausführungsbeispiel aus Fig. 5,
- Fig. 7: einen Längsschnitt durch ein viertes Ausführungsbeispiel,
- Fig. 8: einen Querschnitt durch das Ausführungsbeispiel aus Fig. 7,
- Fig. 9: einen Längsschnitt durch ein fünftes Ausführungsbeispiel,
- Fig. 10: einen Querschnitt durch das Ausführungsbeispiel aus Fig. 9,
- Fig. 11: einen Längsschnitt durch ein sechstes Ausführungsbeispiel,
- Fig. 12: einen Querschnitt durch das Ausführungsbeispiel aus Fig. 11.

### Ausführung der Erfindung

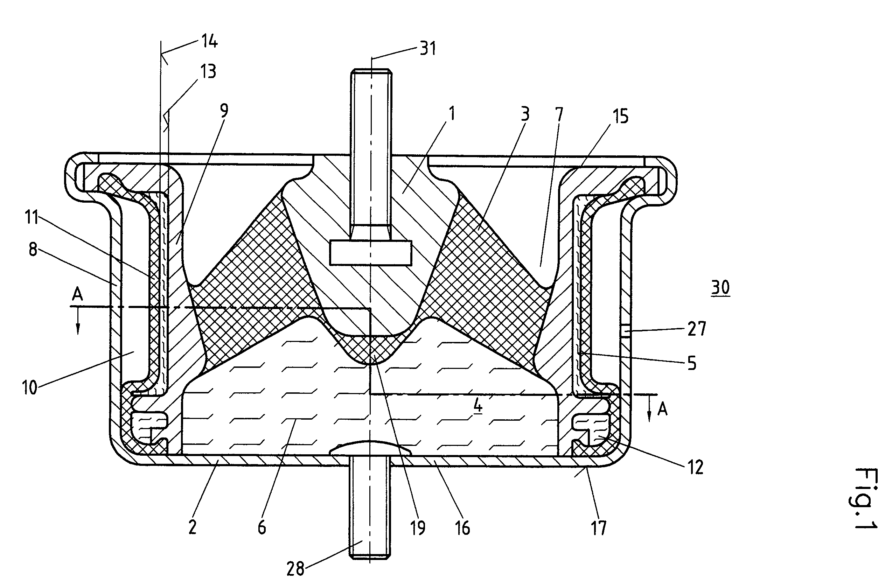

In den Figuren 1 bis 12 sind sechs Ausführungsbeispiele von Hydrolagern gezeigt, bei denen die jeweiligen Arbeitsräume 4 radial außenseitig jeweils von zumindest einer Ausgleichskammer umschlossen sind.

Derartige Hydrolager bauen in axialer Richtung besonders kompakt, da sich in axialer Richtung an den Arbeitsraum 4 kein Ausgleichsraum 5 anschließt. Außerdem weisen die Hydrolager einen einfachen und kostengünstigen Aufbau auf, da der Arbeitsraum 4 und der Ausgleichsraum 5 nicht durch eine konventionelle, als Düsenkäfig ausgebildete Trennwand voneinander getrennt sind.

Bei allen sechs Ausführungsbeispielen gemäß der Figuren 1 bis 12 sind das Traglager 1 und das Auflager 2 durch einen im Wesentlichen kegelstumpfförmigen Federkörper aus gummielastischem Werkstoff aufeinander abgestützt. Der Arbeitsraum 4 und der Ausgleichsraum 5 sind jeweils mit Dämpfungsflüssigkeit 6 gefüllt, wobei die Dämpfungsflüssigkeit 6 beispielsweise aus einem Wasser-Glykolgemisch bestehen kann, um die Fliessfähigkeit auch bei tiefen Temperaturen zu erhalten. Verbunden sind der Arbeitsraum 4 und der Ausgleichsraum 5 durch den Dämpfungskanal 12, der den Arbeitsraum 4 außenumfangsseitig weitgehend umschließt. Durch das vergleichsweise große Volumen an Dämpfungsflüssigkeit 6, das innerhalb des Dämpfungskanals 12 aufgenommen ist, lassen sich tieffrequente, großamplitutige Schwingungen, wie sie beispielsweise beim Überfahren von Bordsteinkanten entstehen, wirkungsvoll dämpfen. Die Dämpfungswirkung beruht auf einer - im Vergleich zu eingeleiteten Schwingungen - gegenphasigen Hin- und Herbewegung der im Dämpfungskanal 12 angeordneten Dämpfungsflüssigkeit 6.

Das Auflager 2 ist in den hier gezeigten Ausführungsbeispielen jeweils zweischalig ausgebildet und umfasst einen Außenring 8, der einen Innenring 9 mit radialem Abstand umschließt, wobei innerhalb des durch den Abstand gebildeten Spalts 10 der Ausgleichsraum 5 angeordnet ist. Der Ausgleichsraum 5 erstreckt sich im Wesentlichen in axialer Richtung und ist durch eine in radialer Richtung ausbauchbare, im Wesentlichen drucklos Volumen aufnehmende Begrenzungswand 11 begrenzt.

Der Außenring 8 weist zumindest eine Durchbrechung 27 auf, so dass der Raum zwischen der Begrenzungswand 11 und dem Außenring 8 mit Umgebungsdruck beaufschlagt ist.
Die Begrenzungswand 11, die in jedem der gezeigten Ausführungsbeispiele auch den Dämpfungskanal 12 gegenüber der Umgebung 30 abdichtet, ist flüssigkeitsdicht zwischen dem Außenring 8 und dem Innenring 9 eingespannt.

Um aus dem Arbeitsraum 4 verdrängte Flüssigkeitsbestandteile im Ausgleichsraum 5 im Wesentlichen ohne Zunahme des Drucks aufnehmen zu können, ist die Begrenzungswand 11 im Wesentlichen rollbalgförmig ausgebildet.

In jedem der hier gezeigten Ausführungsbeispiele ist der Außenring 8 im Wesentlichen topfförmig ausgebildet und besteht aus einem einstückigen Tiefziehblech, das auf der dem Traglager 1 zugewandten Stirnseite 15 des Innenrings 9 verbördelt ist.

Der Ausgleichsraum 5 ist vom Außenumfang 13 des Innenrings 9 und dem Innenumfang 14 der Begrenzungswand 11 begrenzt.

In Fig. 1 ist das Traglager 1 auf der dem Arbeitsraum 4 zugewandten Seite mit einem zweiten Anschlagpuffer 19 versehen, der zur Begrenzung extremer Einfederbewegungen mit dem im Boden 16 angeordneten Befestigungselement 28 in Berührung bringbar ist.

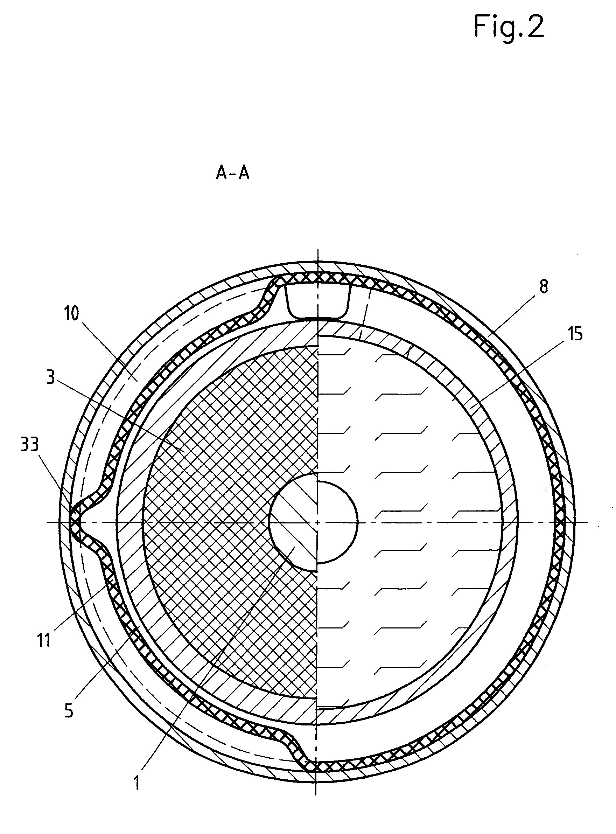

In Fig. 2 ist ein Querschnitt durch das Lager aus Fig. 1 gezeigt. Hier ist der Verlauf des Dämpfungskanals 12 zu erkennen, der den Arbeitsraum 4 mit dem Ausgleichsraum 5 verbindet.

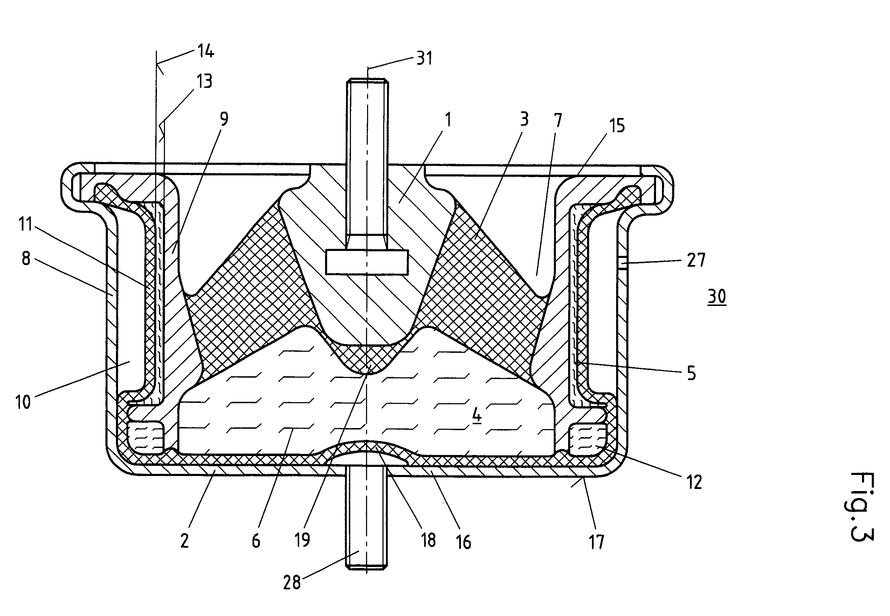

In Fig. 3 ist ein zweites Ausführungsbeispiel eines Hydrolagers im Längsschnitt gezeigt. Das Hydrolager aus Fig. 3 unterscheidet sich vom Hydrolager aus Fig. 1 im Wesentlichen dadurch, dass der erste Anschlagpuffer 18, der sich in Richtung des Traglagers 1 erstreckt, einstückig ineinander übergehend und materialeinheitlich mit der Begrenzungswand 11 ausgebildet ist. Die Begrenzungswandung 11 begrenzt mit dem Innenring 9 nicht nur den Ausgleichsraum 5, sondern auch den Dämpfungskanal 12, wobei die Begrenzungswand 11 den gesamten Boden 16 des Außenrings 8 mit elastomerem Werkstoff überdeckt. Überdeckt ist ebenfalls das Befestigungselement 28, das in diesem Ausführungsbeispiel schematisch durch eine Linsenkopfschraube gebildet ist. Dadurch, dass der Kopf des Befestigungselements 28 von elastomerem Werkstoff überdeckt ist, ergibt sich der erste Anschlagpuffer 18, der mit dem zweiten Anschlagpuffer 19 in Berührung bringbar ist.

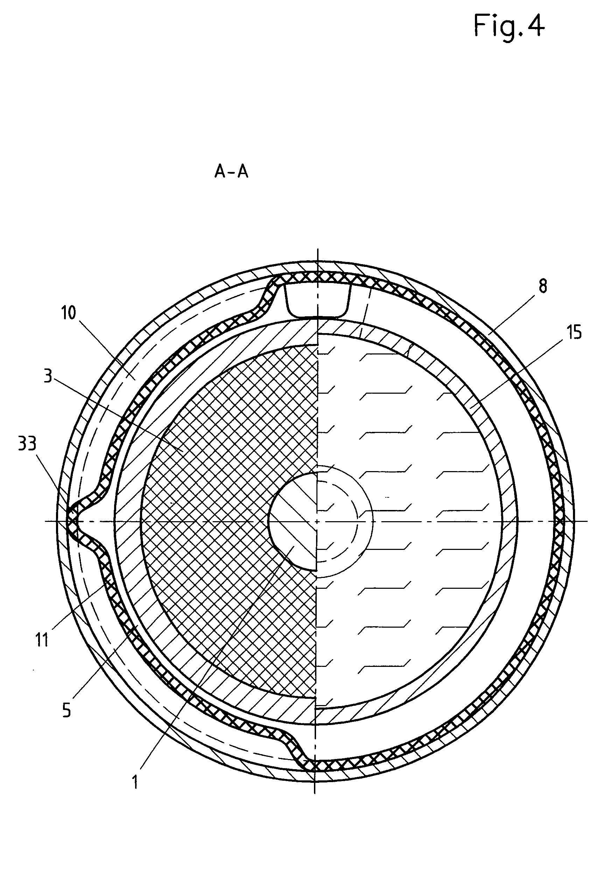

In Fig. 4 ist ein Querschnitt durch das zweite Ausführungsbeispiel aus Fig. 3 gezeigt.

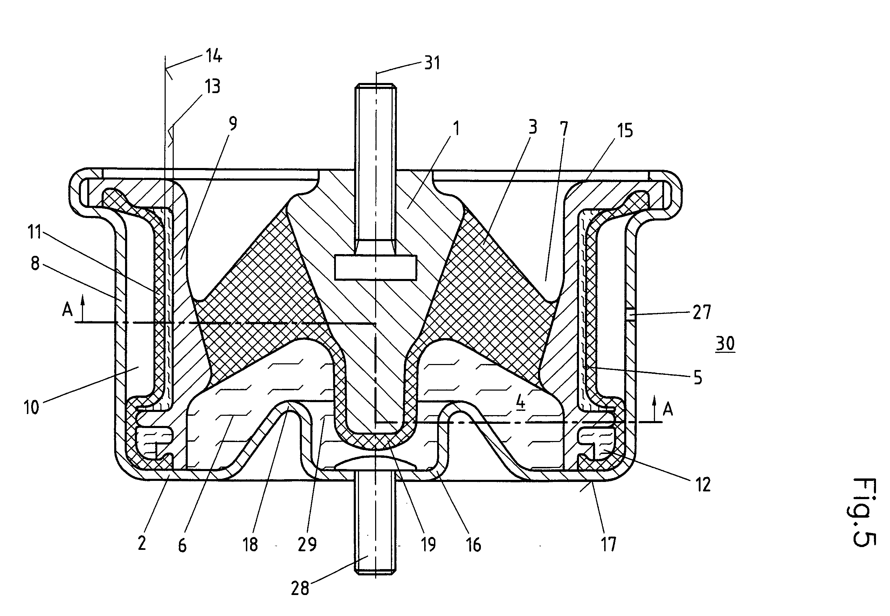

In Fig. 5 ist ein drittes Ausführungsbeispiel gezeigt, das sich von den vorherigen Ausführungsbeispielen im Wesentlichen durch die Form seines Bodens 16 unterscheidet. Der Boden 16 weist einen kreisringförmig ersten Anschlagpuffer 18 auf, der aus Blech geformt ist und axial in Richtung des Traglagers 1 ragt. Der erste Anschlagpuffer 18 begrenzt einen topfförmigen Innenraum 29, in den der zapfenförmige zweite Anschlagpuffer 19 hineinragt. Beim Eintauchen des zweiten Anschlagpuffers 19 in den Innenraum 29 verdrängt dieser die darin befindlichen Flüssigkeitsbestandteile, so dass es bereits vor Anschlagberührung zu einer hydraulischen Endlagendämpfung kommt.

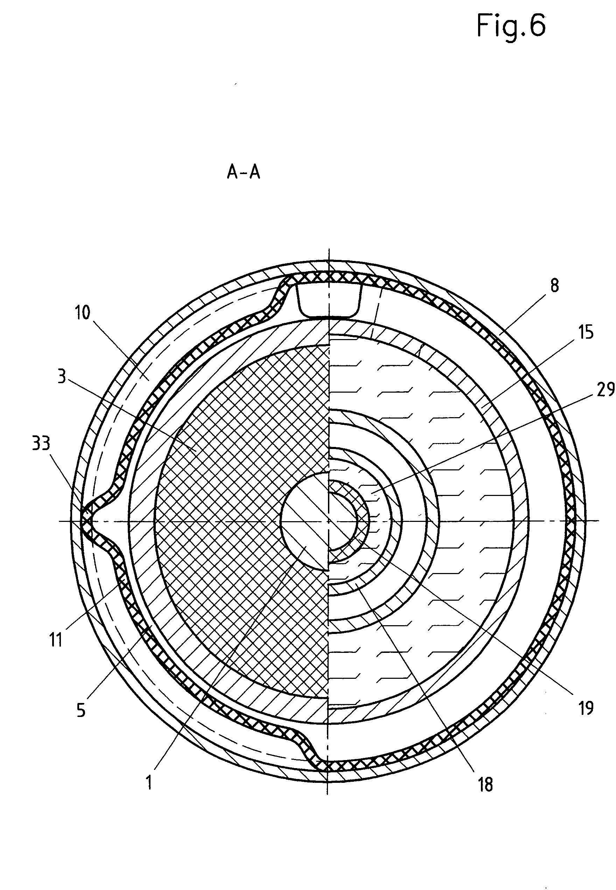

In Fig. 6 ist ein Querschnitt durch das dritte Ausführungsbeispiel aus Fig. 5 gezeigt.

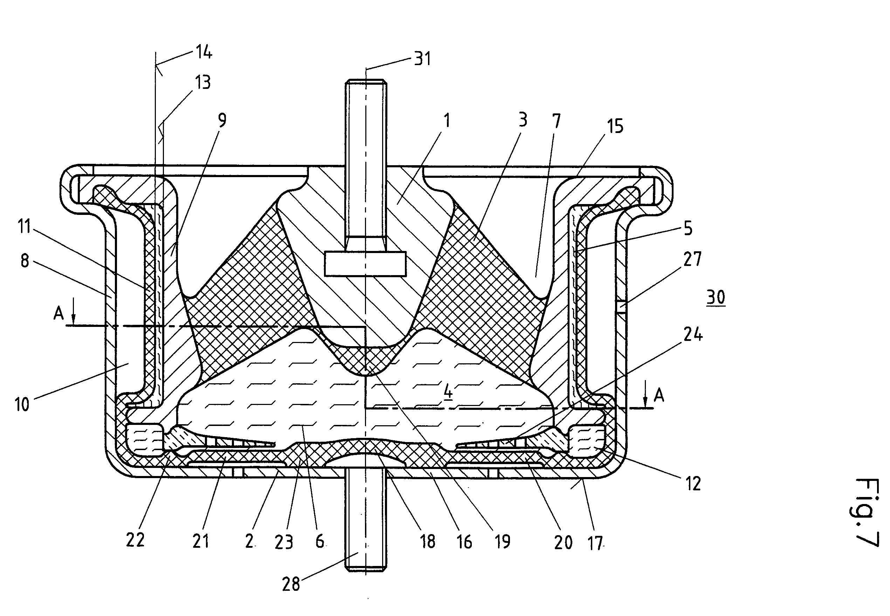

In Fig. 7 ist ein viertes Ausführungsbeispiel des erfindungsgemäßen Hydrolagers gezeigt. Dieses Hydrolager unterscheidet sich von den zuvor beschriebenen im Wesentlichen dadurch, dass zusätzlich zu einer Dämpfung tieffrequenter, großamplitutiger Schwingungen auch höherfrequente, kleinamplitudige Schwingungen gedämpft werden können.

Der Düsenkäfig wird im Wesentlichen durch den Boden 16 des Außenrings 8 gebildet, der mehrere Durchbrechungen 27 in Richtung der Umgebung 30 aufweist. Innerhalb des Arbeitsraums 4 ist ein gitterförmiger Anschlag 24 angeordnet, der als separat hergestelltes Einlegeteil ausgebildet ist und in diesem Ausführungsbeispiel aus einem metallischen Werkstoff besteht. Der kreisringförmige Teilbereich 21 der Membran 20 ist sowohl dem Boden 16 als auch dem Anschlag 24 jeweils mit einem übereinstimmenden axialen Abstand benachbart zugeordnet und zwischen Boden 16 und Anschlag 24 zur Isolierung höherfrequenter, kleinamplitudiger Schwingungen phasenverschoben zu den eingeleiteten Schwingungen beweglich. Der kreisringförmige Teilbereich 21 ist radial außenseitig und radial innenseitig durch den Abstandhalter 22 und den Abstandhalter 23 begrenzt, wobei die Abstandhalter 22, 23 den Boden 16 stets anliegend berühren.

Wie im zweiten Ausführungsbeispiel gemäß Fig. 3, ist die Begrenzungswand 11 einstückig ineinander übergehend mit dem elastomeren Werkstoff ausgebildet, der den Dämpfungskanal 12 begrenzt, die Membran 20 bildet, einschließlich des kreisringförmigen, schwingfähigen Teilbereichs 21 und das Befestigungselement 28 überdeckt und dadurch den ersten Anschlagpuffer 18 bildet, der mit dem zweiten Anschlagpuffer 19 zur Begrenzung extremer Einfederbewegungen in Berührung bringbar ist.
Trotz ausgezeichneter Gebrauchseigenschaften bezüglich der Dämpfung tieffrequenter, großamplitudiger Schwingungen und der Isolierung höherfrequenter, kleinamplitudiger Schwingungen baut das Hydrolager gemäß Fig. 7 in axialer Richtung sehr kompakt, was im Wesentlichen darauf zurückzuführen ist, dass der Ausgleichsraum 5 den Arbeitsraum 4 und den Federkörper 3 sowie das Traglager 1 radial außenseitig umschließt.

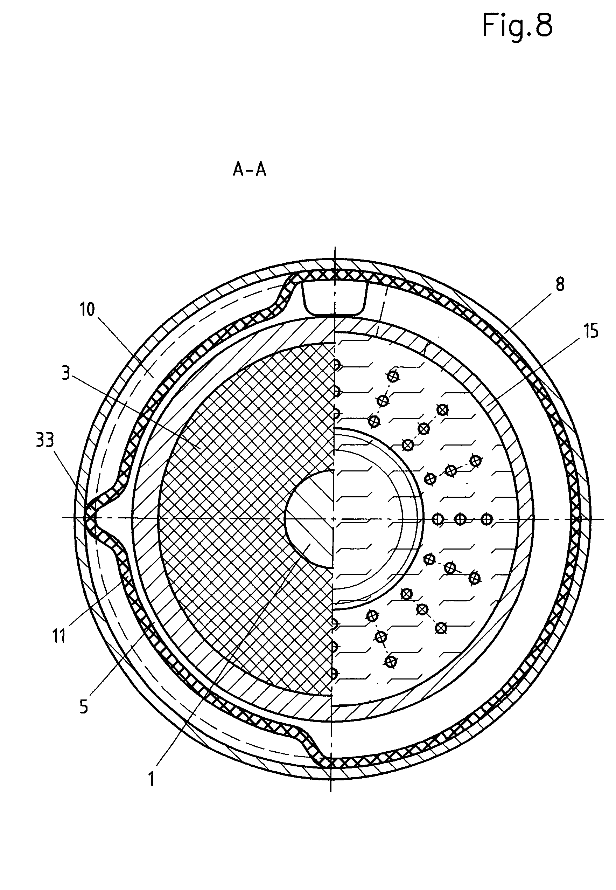

In Fig. 8 ist das Hydrolager aus Fig. 7 in quergeschnittener Darstellung gezeigt.

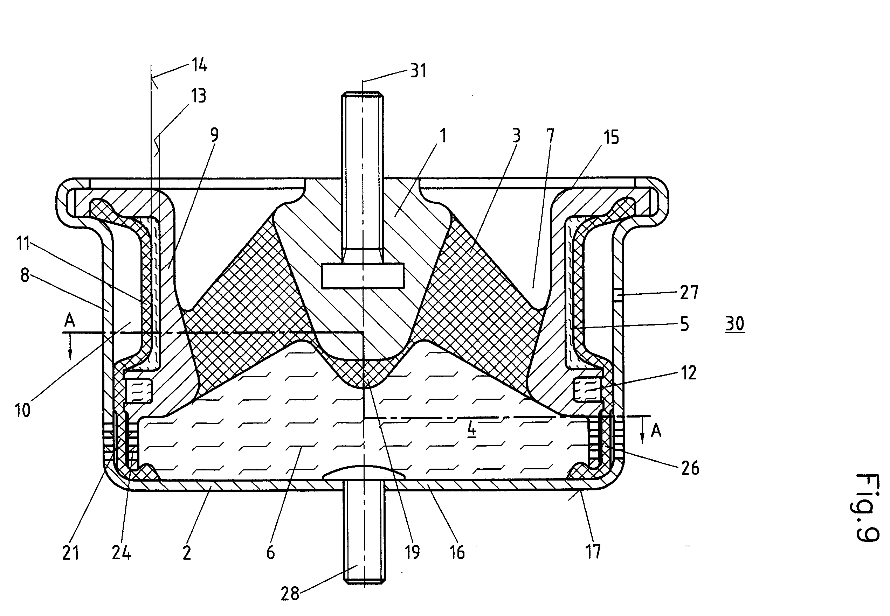

In Fig. 9 ist ein fünftes Ausführungsbeispiel eines erfindungsgemäßen Hydrolagers gezeigt, das sich hinsichtlich seiner Gebrauchseigenschaften und Funktionen vom Hydrolager aus den Figuren 7 und 8 nicht wesentlich unterscheidet.

Anstelle des separaten Einlegeteils, das den gitterförmigen Anschlag 24 für den Teilbereich 21 aus Fig. 8 bildet, erstreckt sich der gitterförmige Anschlag 24 in diesem Ausführungsbeispiel in axialer Richtung konzentrisch zur Achse 31 nach unten und klemmt den Abstandhalter 23 flüssigkeitsdicht gegen den Boden 16. Auf der dem zweiten Anschlagpuffer 19 gegenüberliegenden Seite ist der Boden 16 demgegenüber nicht mit einem elastomeren Werkstoff beschichtet, so dass der zweite Anschlagpuffer 19 zur Begrenzung extremer Einfederbewegungen das Befestigungselement 28 berührt.

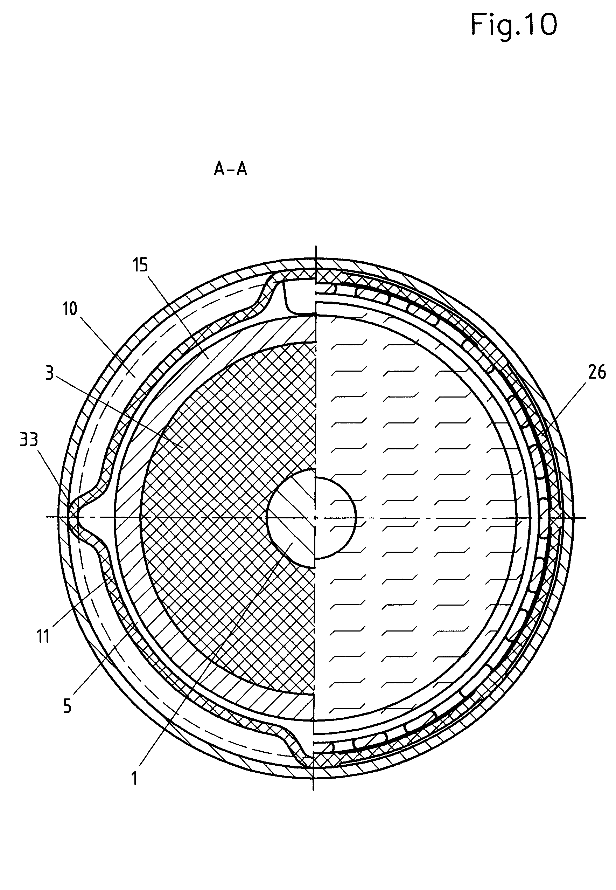

In Fig. 10 ist ein Querschnitt durch das Ausführungsbeispiel aus Fig. 9 gezeigt.

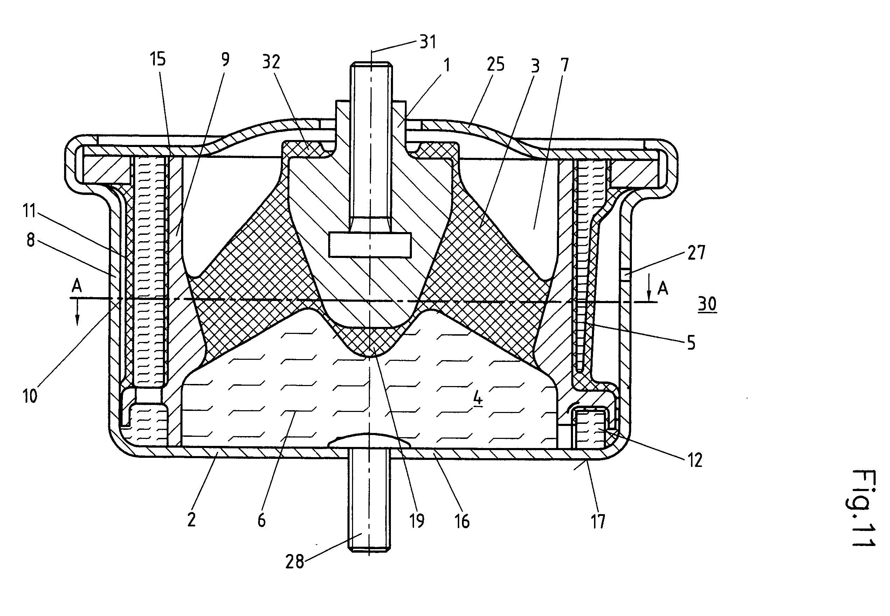

In Fig. 11 ist ein sechstes Ausführungsbeispiel eines erfindungsgemäßen Hydrolagers gezeigt, das zur Begrenzung extremer Ausfederbewegungen einen Ausfederanschlag 25 aufweist, an dem der kreisringförmige Anschlag 32 anlegbar ist. Gebrauchsdauerverringernde Zug- und/oder Schubspannungen innerhalb des Federkörpers 3 werden dadurch wirkungsvoll vermieden.

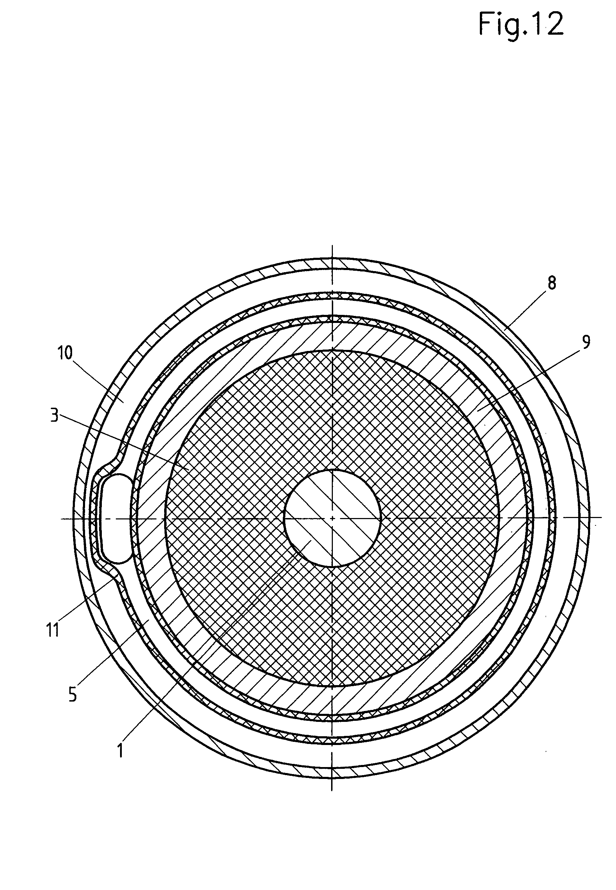

Durch diese Form des Hydrolagers werden Anschläge für axiale und radiale Auslenkbewegungen gebildet. Außerdem wird durch den Innenraum des ersten Anschlags 29 ein vorteilhafter Effekt im höherfrequenten Bereich erzielt. In diesem Frequenzbereich ergibt sich eine Hin- und Herverlagerung der Flüssigkeitsbestandteile in und aus diesem Bereich.
Der Hauptvorteil des Hydrolagers aus den Figuren 11 und 12 ist darin zu sehen, dass die Begrenzungswand 11 einen integralen Bestandteil des Federkörpers 3 bildet und der Ausfederanschlag 25 als Schließglied und flüssigkeitsdichter Abschluß des Ausgleichsraums 5 ausgebildet ist.

In all den hier gezeigten Ausführungsbeispielen ist, im Querschnitt der Hydrolager betrachtet, eine Rippe 33 angeordnet, die einen Bestandteil der Begrenzungswand 11 bildet. Die Rippe 33 bewirkt, dass die mechanische Belastung auf die Begrenzungswand 11 reduziert wird, was im Hinblick auf gleichbleibend gute Gebrauchseigenschaften während einer langen Gebrauchsdauer von hervorzuhebendem Vorteil ist.

### Bezugszeichenliste zu 00PA0105

- 1: Traglager
- 2: Auflager
- 3: Federkörper
- 4: Arbeitsraum
- 5: Ausgleichsraum
- 6: Dämpfungsflüssigkeit
- 7: Innenraum des Auflagers
- 8: Außenring
- 9: Innenring
- 10: Spalt
- 11: Begrenzungswand
- 12: Dämpfungskanal
- 13: Außenumfang des Innenrings
- 14: Innenumfang der Begrenzungswand
- 15: Stirnseite des Innenrings
- 16: Boden
- 17: Auflagerseitige Stirnseite
- 18: Erster Anschlagpuffer
- 19: Zweiter Anschlagpuffer
- 20: Membran axial
- 21: Kreisringförmiger Teilbereich
- 22: Abstandhalter radial außen für Teilbereich
- 23: Abstandhalter radial innen für Teilbereich
- 24: Gitterförmiger Anschlag für Teilbereich
- 25: Ausfederanschlag
- 26: Membran radial
- 27: Durchbrechung im Außenring
- 28: Befestigungselement im Boden des Auflagers
- 29: Innenraum des ersten Anschlags in Fig. 5 und 6
- 30: Umgebung
- 31: Achse
- 32: Anschlag des Traglagers in Richtung Ausfederanschlag
- 33: Rippe

## Patentansprüche

1. Hydrolager, umfassend ein Traglager (1) und ein Auflager (2), die durch einen Federkörper (3) aus gummielastischem Werkstoff aufeinander abgestützt sind und einen Arbeits- (4) und einen Ausgleichsraum (5) begrenzen, wobei der Arbeits- (4) und der Ausgleichsraum (5) jeweils mit Dämpfungsflüssigkeit (6) gefüllt und flüssigkeitsleitend verbunden sind, wobei das Auflager (2) im Wesentlichen topfförmig ausgebildet ist, wobei das Traglager (1) und der Federkörper (3) im Wesentlichen in dem vom topfförmigen Auflager (2) begrenzten Innenraum (7) angeordnet sind, wobei das Auflager (2) außenumfangsseitig zweischalig ausgebildet ist und einen Außenring (8) aufweist, der einen Innenring (9) mit radialem Abstand umschließt, wobei in dem durch den Abstand gebildeten Spalt der Ausgleichsraum (5) angeordnet ist, der durch eine sich in axialer Richtung erstreckende und in radialer Richtung ausbauchbare, im Wesentlichen drucklos Volumen aufnehmende Begrenzungswand (11) begrenzt ist und wobei die Begrenzungswand (11) flüssigkeitsdicht zwischen Außen- (8) und Innenring (9) angeordnet ist.

2. Hydrolager nach Anspruch 1, **dadurch gekennzeichnet, dass** der Federkörper (3) kegelstumpfförmig ausgebildet ist.

3. Hydrolager nach einem der Ansprüche 1 oder 2, **dadurch gekennzeichnet, dass** die Begrenzungswand (11) rollbalgförmig ausgebildet ist.

4. Hydrolager nach einem der Ansprüche 1 bis 3, **dadurch gekennzeichnet, dass** der Federkörper (3) zwischen dem Traglager (1) und dem Innenring (9) vulkanisiert ist.

5. Hydrolager nach einem der Ansprüche 1 bis 4, **dadurch gekennzeichnet, dass** der Innenring (9) und die Begrenzungswand (11) einen Dämpfungskanal (12) begrenzen, der den Arbeits- (4) und den Ausgleichsraum (5) flüssigkeitsleitend verbindet.

6. Hydrolager nach einem der Ansprüche 1 bis 5, **dadurch gekennzeichnet, dass** der Ausgleichsraum (5) vom Außenumfang (13) des Innenrings (9) und dem Innenumfang (14) der Begrenzungswand (11) begrenzt ist.

7. Hydrolager nach einem der Ansprüche 1 bis 6, **dadurch gekennzeichnet, dass** der Außenring (8) durch ein tiefziehbares Blechteil gebildet ist, das die dem Traglager (1) zugewandte Stirnseite (15) des Innenrings (9) formschlüssig umgreift.

8. Hydrolager nach einem der Ansprüche 1 bis 7, **dadurch gekennzeichnet, dass** der Außenring (8) einen Boden (16) aufweist, der die auflagerseitige Stirnseite (17) des Hydrolagers bildet.

9. Hydrolager nach Anspruch 8, **dadurch gekennzeichnet, dass** der Boden (16) zumindest einen in Richtung des Traglagers (1) vorstehenden ersten Anschlagpuffer (18) aufweist.

10. Hydrolager nach Anspruch 9, **dadurch gekennzeichnet, dass** der erste Anschlagpuffer (18) aus einem elastomeren Werkstoff besteht.

11. Hydrolager nach einem der Ansprüche 1 bis 10, **dadurch gekennzeichnet, dass** der erste Anschlagpuffer (18) und die Begrenzungswand (11) materialeinheitlich und einstückig ineinander übergehend ausgebildet sind.

12. Hydrolager nach einem der Ansprüche 1 bis 11, **dadurch gekennzeichnet, dass** das Traglager (1) zumindest einen axial in Richtung des Arbeitsraums (4) vorstehenden zweiten Anschlagpuffer (19) aufweist.

13. Hydrolager nach einem der Ansprüche 9 bis 12, **dadurch gekennzeichnet, dass** der erste (18) und der zweite Anschlagpuffer (19) zur Begrenzung von extremen Auslenkbewegungen in axialer Richtung aneinander anlegbar sind.

14. Hydrolager nach einem der Ansprüche 1 bis 13, **dadurch gekennzeichnet, dass** innerhalb des Arbeitsraums (4) eine in axialer Richtung schwingfähige Membran (20) angeordnet ist.

15. Hydrolager nach Anspruch 14, **dadurch gekennzeichnet, dass** die Membran (20) materialeinheitlich und einstückig ineinander übergehend mit der Begrenzungswand (11) ausgebildet ist und dem Boden (16) in zumindest einem kreisringförmigen Teilbereich (21) mit axialem Abstand benachbart zugeordnet ist.

16. Hydrolager nach Anspruch 15, **dadurch gekennzeichnet, dass** der kreisringförmige Teilbereich (21) außen- und innenumfangsseitig durch jeweils zumindest einen Abstandhalter (22, 23) am Boden (16) abgestützt ist.

17. Hydrolager nach einem der Ansprüche 15 oder 16, **dadurch gekennzeichnet, dass** der Teilbereich (21) auf der dem Arbeitsraum (4) zugewandten Seite von einem mit axialem Abstand benachbart angeordneten gitterförmigen Anschlag (24) überdeckt ist.

18. Hydrolager nach Anspruch 17, **dadurch gekennzeichnet, dass** der Anschlag (24) als separat hergestelltes Einlegeteil ausgebildet ist.

19. Hydrolager nach einem der Ansprüche 14 bis 18, **dadurch gekennzeichnet, dass** der jeweilige axiale Abstand zwischen dem Teilbereich (21) und dem Boden (16) sowie dem Teilbereich (21) und dem Anschlag (24) im Wesentlichen gleich ist.

20. Hydrolager nach einem der Ansprüche 1 bis 13, **dadurch gekennzeichnet, dass** innerhalb des Arbeitsraums (4) eine in radialer Richtung schwingfähige Membran (26) angeordnet ist.

21. Hydrolager nach Anspruch 20, **dadurch gekennzeichnet, dass** die Membran (26) materialeinheitlich und einstückig ineinander übergehend mit der Begrenzungswand (11) ausgebildet ist und sich in axialer Richtung erstreckt.

22. Hydrolager nach einem der Ansprüche 20 oder 21, **dadurch gekennzeichnet, dass** die Membran (26) auf der dem Arbeitsraum (4) zugewandten Seite von einem gitterförmigen Anschlag (24) überdeckt ist.

23. Hydrolager nach Anspruch 22, **dadurch gekennzeichnet, dass** der Anschlag (24) einen einstückigen Bestandteil des Innenrings (9) bildet.

24. Hydrolager nach einem der Ansprüche 1 bis 23, **dadurch gekennzeichnet, dass** der Ausgleichsraum (4) in zumindest einem Teilbereich seiner umfangsseitigen Erstreckung einen, im Längsschnitt betrachtet, sich in Richtung des Bodens (16) des Auflagers (2) verkleinernden Querschnitt aufweist.

25. Hydrolager nach einem der Ansprüche 1 bis 24, **dadurch gekennzeichnet, dass** dem Traglager (1) auf seiner dem Auflager (2) axial abgewandten Seite ein Ausfederanschlag (25) zugeordnet ist.

26. Hydrolager nach Anspruch 25, **dadurch gekennzeichnet, dass** der Ausfederanschlag (25) kreisringförmig ausgebildet ist, sich bis über das Traglager (1) erstreckt und bei unerwünscht großen Ausfederbewegungen mit dem Traglager (1) in Berührung bringbar ist.
